# EUROPÄISCHE PATENTANMELDUNG

(11) **EP 4 786 313 A1**
(43) Veröffentlichungstag der Anmeldung: **05.08.2026**
(21) Anmeldenummer: 25155361.6
(22) Anmeldetag: 31.01.2025
(51) Int. Cl.: B62D 13/06, B62D 15/02

(54) **VERFAHREN ZUR REGELUNG EINER RÜCKWÄRTSFAHRT EINES ROUTENZUGS, VERFAHREN ZUM TRAINING EINES NEURONALEN NETZES UND VORRICHTUNG FÜR EINE RÜCKWÄRTSFAHRT EINES ROUTENZUGS**

(71) Anmelder: Siemens Aktiengesellschaft, 80333 München (DE)
(72) Erfinder: Bachmann, Christian, 80686 München (DE); Bergmann, Dominik, 83679 Sachsenkam (DE); Gruß, Oskar, 80638 München (DE); Pais, Guillaume, 81827 München (DE); Röhrl, Verena, 85301 Schweitenkirchen (DE)
(74) Vertreter: Siemens Patent Attorneys

(57) **Zusammenfassung**

Es wird ein Verfahren zur Regelung einer Rückwärtsfahrt eines Routenzugs vorgeschlagen, umfassend die Schritte:
- erfassen und/oder empfangen wenigstens eines Gierwinkels eines letzten Anhängers des Routenzugs, wobei der Gierwinkel abhängig zu einer räumlichen Lage eines Zugfahrzeugs des Routenzugs ist; und
gekennzeichnet ist durch folgenden Schritt:
- regeln einer Solltrajektorie für den letzten Anhänger des Routenzugs abhängig vom erfassten Gierwinkel, wobei hierzu eine Drehzahl wenigstens eines Antriebsrads des Zugfahrzeugs bei der Rückwärtsfahrt so eingestellt wird, dass eine Lineargeschwindigkeit und eine Rotationsgeschwindigkeit des letzten Anhängers der Solltrajektorie folgen, wobei ein Regelsinn des Antriebsrads des Zugfahrzeugs abhängig von einer Anzahl von Anhängern des Routenzugs bestimmt wird, wobei der Regelsinn sich in Abhängigkeit von einer geraden oder ungeraden Anzahl von Anhängern umkehrt.

Weiterhin betrifft die Erfindung ein Verfahren zum Training eines neuronalen Netzes und Vorrichtung für eine Rückwärtsfahrt eines Routenzugs.

## Beschreibung

Die Erfindung betrifft ein Verfahren gemäß dem Oberbegriff des Patentanspruches 1 sowie ein Verfahren mit den Merkmalen des unabhängigen Patentanspruches 6 und eine Vorrichtung mit den Merkmalen des unabhängigen Patentanspruches 8.

Eine Rückwärtsfahrt mit mehreren Anhängern stellt eine bedeutende Herausforderung für einen Fahrer und ein Zugfahrzeug dar, da die Rückwärtsfahrt ein hohes Risiko für Selbstkollisionen birgt. Während eine Vorwärtsfahrt mit mehreren Anhängern oft selbstregulierend wirkt, ist dies bei der Rückwärtsfahrt nicht der Fall. Insbesondere bei einer zunehmenden Anzahl von Anhängern wird die Steuerung immer komplexer und schwieriger, da nicht nur eine Position eines letzten Anhängers, sondern auch die Positionen der Anhänger untereinander relevant sind.

Um Kollisionen zu vermeiden, wird bei Fahrten möglichst auf Rückwärtsfahrten verzichtet. Dies erfordert eine vorausschauende Planung von Routen und Manövern, um das Zugfahrzeug hauptsächlich vorwärtsfahren zu lassen. Falls eine Rückwärtsfahrt dennoch unvermeidbar ist, übernehmen erfahrene Routenzugführer diese Aufgabe, wobei die Anzahl der Anhänger möglichst begrenzt wird und bei einem solchen manuellen Vorgang mit zusätzlichen Kosten und Zeitaufwänden zu rechnen ist. Das Problem betrifft insbesondere Routenzüge in der Intralogistik, aber auch Lastkraftwagen als Gespanne mit insbesondere zwei Anhängern sind betroffen.

Der vorliegenden Erfindung liegt die Aufgabe zugrunde, eine Rückwärtsfahrt für einen Routenzug zu regeln.

Die Aufgabe wird durch ein Verfahren mit den Merkmalen des unabhängigen Patentanspruches 1 sowie durch ein Verfahren mit den Merkmalen des unabhängigen Patentanspruches 6 und einer Vorrichtung mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Verfahren zur Regelung einer Rückwärtsfahrt eines Routenzugs umfasst folgende Schritte:
- erfassen und/oder empfangen wenigstens eines Gierwinkels eines letzten Anhängers des Routenzugs, wobei der Gierwinkel abhängig zu einer räumlichen Lage eines Zugfahrzeugs des Routenzugs ist; und
gekennzeichnet durch folgenden Schritt:
- regeln einer Solltrajektorie für den letzten Anhänger des Routenzugs abhängig vom erfassten Gierwinkel, wobei hierzu eine Drehzahl wenigstens eines Antriebsrads des Zugfahrzeugs bei der Rückwärtsfahrt so eingestellt wird, dass eine Lineargeschwindigkeit und eine Rotationsgeschwindigkeit des letzten Anhängers der Solltrajektorie folgen, wobei ein Regelsinn des Antriebsrads des Zugfahrzeugs abhängig von einer Anzahl von Anhängern des Routenzugs bestimmt wird, wobei der Regelsinn sich in Abhängigkeit von einer geraden oder ungeraden Anzahl von Anhängern umkehrt.

Der Routenzug kann aus einem Zugfahrzeug und einer variablen Anzahl von Anhängern bestehen. Alternativ kann anstelle eines Zugfahrzeugs ein Schubfahrzeug verwendet werden. Bei einem Schubfahrzeug mit mehreren Anhängern ähnelt eine Vorwärtsfahrt aus Sicht einer Fahrzeugkinematik der Rückwärtsfahrt des Routenzugs.

Die Rückwärtsfahrt ist die Fahrt entgegen einer primären Fahrtrichtung, alternative Begriffe in diesem Kontext können die Fahrt in Antriebsrichtung und die Fahrt in Lastrichtung sein. Die Begriffe sind von einem Gabelstapler in der Intralogistik entlehnt, welcher entweder in Richtung seiner auf einer Gabel aufgenommenen Last oder in Richtung des im Gabelstapler verbauten Antriebsrads, also Antriebsrichtung, fahren kann.

Der Gierwinkel kann in einem Modell von Roll-Nick-Gier-Winkel einen Eulerwinkel beschreiben, welcher eine Gierung an einer Vertikalachse angibt.

Der Anhänger kann ein an das Zugfahrzeug ankoppelbares mechanisches Element sein. Solche ankoppelbaren mechanischen Elemente können auch als Anbauteile bezeichnet werden. Anbauteile können hierbei Anhänger sein, die hochspezifische Lasten transportieren können, insbesondere industrielle Meterware auf Rollen oder bestimmte Arten von Paletten und Containern. Möglich ist auch, dass insbesondere ein Container mit Rollen durch das Ankoppeln an das Zugfahrzeug selbst zum Anhänger wird.

Die Solltrajektorie ist eine Art von Trajektorie oder auch Bahnkurve, sie kann eine Lösungskurve für eine Abbildung einer gewünschten Bahnkurve sein, welche durch den Routenzug abgefahren wird.

Der Regelsinn kann eine Richtung einer Regelwirkung beschreiben. Er kann angeben, ob eine Erhöhung einer Stellgröße zu einer Erhöhung oder Verringerung der Regelgröße führt.

Die Umkehrung des Regelsinns kann insbesondere beim letzten Anhänger im Routenzug bei einer geraden oder ungeraden Gesamtanzahl von Anhängern vorliegen, wobei ein Gierungsverhalten der Anhänger in seiner betragsmäßigen Änderung ähnlich bleibt, aber sich die Änderung in ihrem Vorzeichen umkehrt.

Das Zugfahrzeug kann insbesondere ein für die Intralogistik spezialisiertes Zugfahrzeug oder ein Lastkraftfahrzeug oder ein landwirtschaftliches Nutzfahrzeug sein und insbesondere eine Antriebskinematik eines Panzerantriebs oder eines Heckantriebs oder eines Frontantriebs oder eines Allradantriebs oder eines Dreirad-Antriebes mit einem angetriebenen Rad oder eines Differenzialantriebes oder eines Fahr-Lenk-Antrieb mit vier bzw. zwei angetriebenen Rädern oder eines Mecanum-Antriebs.

Durch die vorliegende Erfindung wird das Verfahren zur vorteilhaften Regelung der Rückwärtsfahrt des Routenzugs beschrieben. Das ist deshalb der Fall, weil das Verfahren vollständig regelungstechnisch für eine ungerade und gerade Anzahl von Anhängern abbildbar ist und keine kostenintensive Unterstützung durch einen Benutzer erfordert wird.

In einer vorteilhaften Weiterbildung der Erfindung wird die Solltrajektorie mittels eines neuronalen Netzes geregelt.

Das neuronale Netz kann eine Fähigkeit zu einer Multimodalität aufweisen, wobei insbesondere als Eingangswerte und/oder Ausgangswerte Parameter aus Bilddaten und/oder Geschwindigkeitsdaten und/oder die Anzahl von Anhänger und/oder die Antriebskinematiken von Zugfahrzeug und Anhänger und/oder eine Beschaffenheit eines Fahruntergrunds und/oder deine Beschaffenheit einer jeweiligen Kopplung zwischen Zugfahrzeug und Anhänger und zwischen Anhänger und Anhänger für eine Inferenz durch das neuronale Netz kombiniert werden können.

Dadurch ist es vorteilhafterweise möglich die Regelung der Rückwärtsfahrt, ohne einem Vorhandensein eines exakten Parametersatz bereitzustellen. Das ist deshalb der Fall, weil ein typischerweise genutzter Regler, insbesondere PID-Regler diesen Parametersatz erfordert hätte, während das neuronale Netz unter Einbezug einer möglichen längeren Einschwingzeit die nötigen Parameter vorteilhafterweise, selbst ermitteln kann.

Das erfindungsgemäße Verfahren zum Training des neuronalen Netzes, ist dadurch gekennzeichnet, dass Trainingsdaten mittels einer Routenzugsimulation und/oder einer Umgebungssimulation generiert werden und das neuronale Netz mit diesen Trainingsdaten trainiert wird, wobei die Routenzugsimulation Trainingsdaten für Routenzüge mit bis zu acht Anhänger generiert.

Die Trainingsdaten können insbesondere Bilddaten und/oder Geschwindigkeitsdaten und/oder die Anzahl von Anhänger und/oder die Antriebskinematiken von Zugfahrzeug und Anhänger und/oder eine Beschaffenheit eines Fahruntergrunds und/oder deine Beschaffenheit einer jeweiligen Kopplung zwischen Zugfahrzeug und Anhänger und zwischen Anhänger und Anhänger umfassen.

Die Routenzugsimulation kann insbesondere auf einer Materialflusssimulation beruhen.

Die Umgebungssimulation kann ein physikalisches Modell des Routenzugs und einer Umgebung umfassen.

Dadurch ist es vorteilhafterweise möglich die Bereitstellungskosten für Trainingsdaten zu senken, wobei eine Kombination aus Materialflusssimulation und physikalischen Modell möglich ist.

Die erfindungsgemäße Vorrichtung für eine Rückwärtsfahrt eines Routenzugs umfasst ein Zugfahrzeug, wenigstens einen Anhänger, eine Recheneinheit und eine Erfassungseinheit, dadurch gekennzeichnet, dass
- die Erfassungseinheit dazu ausgebildet ist, einen letzten Anhänger des Routenzugs zu erfassen und ein Abbild des Anhängers bereitzustellen;
- die Recheneinheit mittels des Abbilds zum Berechnen eines Gierwinkels des letzten Anhängers ausgebildet ist, wobei der Gierwinkel abhängig zu einer räumlichen Lage des Zugfahrzeugs des Routenzugs ist; und
- die Recheneinheit zum Regeln einer Solltrajektorie für den letzten Anhänger des Routenzugs, abhängig vom erfassten Gierwinkel, ausgebildet ist, wobei hierzu eine Drehzahl wenigstens eines Antriebsrads des Zugfahrzeugs bei der Rückwärtsfahrt so eingestellt wird, dass eine Lineargeschwindigkeit und eine Rotationsgeschwindigkeit des letzten Anhängers der Solltrajektorie folgen, wobei ein Regelsinn des Antriebsrads des Zugfahrzeugs abhängig von einer Anzahl von Anhängern des Routenzugs bestimmbar ist.

Die Recheneinheit kann ein Teil einer Zugfahrzeugsteuerung sein und als eine speicherprogrammierbare Steuerung und/oder ein industrieller Rechner ausgebildet sein.

Die Erfassungseinheit kann ein bildgebendes Verfahren verwenden, um das Abbild des letzten Anhängers bereitzustellen, insbesondere mittels einer Time-of-Flight-Kamera, RGB-IR-Kamera oder Wärmbildkameras. Die Erfassungseinheit kann auch eine Inertiale Messeinheit sein, welche den Gierwinkel des Anhängers mittels der bereitgestellten Erfassung von bis zu sechs möglichen kinematischen Freiheitsgraden bestimmbar macht.

Durch die vorliegende Erfindung wird eine Vorrichtung zur vorteilhaften Regelung der Rückwärtsfahrt des Routenzugs beschrieben. Das ist deshalb der Fall, denn die Vorrichtung für eine ungerade und gerade Anzahl von Anhängern die Rückwärtsfahrt ermöglicht und keine kostenintensive manuelle Rückwärtsfahrt durch einen Benutzer erfordert wird.

Gemäß einer vorteilhaften Ausgestaltung wird die Solltrajektorie mittels eines PI-Reglers geregelt.

Der PI-Regler ist eine mögliche Ausprägung eines in einen Regelkreis eingebunden Regler, weitere bekannte Regler sind der PD-Regler und der PID-Regler.

Dadurch ist es vorteilhafterweise möglich einen stationären Fehler zu eliminieren, der bei einem reinen P-Regler bestehen bleiben könnte.

Gemäß einer vorteilhaften Ausgestaltung wird die Rückwärtsfahrt durch ein autonom fahrendes Fahrzeug durchgeführt.

Das autonom fahrende Fahrzeug kann ein fahrerloses Transport System oder ein mobiler Roboter sein. Auch ein autonom fahrender Lastkraftwagen oder landwirtschaftliches Fahrzeug kann als autonom fahrendes Fahrzeug gelten.

Dadurch ist es vorteilhafterweise möglich die Fähigkeiten des autonom fahrenden Fahrzeugs zu erweitern. Das ist deshalb der Fall, weil eine Möglichkeit einer Rückwärtsfahrt vorteilhafterweise dem autonom fahrenden Fahrzeug mehr Freiheitsgrad in einer Wegplanung ermöglicht.

In einer vorteilhaften Weiterbildung der Erfindung wird die Rückwärtsfahrt durch einen Fahrer gestartet, wobei der Routenzug für die Rückwärtsfahrt manuell in einem Tippbetrieb fährt und der Routenzug außerhalb dieses Tippbetriebs manuell durch den Fahrer gesteuert wird.

Der Tippbetrieb kann eine Betriebsart für eine fördertechnische Anlage sein, wobei ein Routenzug insbesondere in der Intralogistik als eine fördertechnische Anlage betrachtet werden kann. Der Tippbetrieb ist dadurch charakterisiert, dass ein Nutzer, insbesondere ein Fahrer eine Bedieneinheit, insbesondere einen Knopf während der Ausführung einer Funktion gedrückt halten, also tippen, muss. Ein Loslassen der Bedieneinheit führt zu einem Abbruch der Funktion. Im Kontrast zum Tippbetrieb steht ein Automatikbetrieb, bei dem ein gewisser Automatismus durch den Nutzer einmalig gestartet und ggf. aktiv beendet wird.

Dadurch ist es vorteilhafterweise möglich manuell gefahrene Routenzüge um die anspruchsvolle Rückwärtsfahrt als eine teilautomatisierte Fahrfunktion der Assistenzfunktion zu erweitern, wodurch auch günstigere unerfahrene Fahrer befähigt werden können. Vergleichbar wäre diese Funktion mit einem Einparkassistenten bei einem PKW, wobei ein anspruchsvolles Einparkmanöver teilautomatisiert wird.

Gemäß einer vorteilhaften Ausgestaltung wird das mit Daten aus der Routenzugsimulation und/oder Umgebungssimulation trainierte neuronale Netz mittels Daten aus realen Testfahrten nachtrainiert, wobei eine Methode des Transfer Learnings verwendet wird.

Transfer Learning umfasst eine Technik des maschinellen Lernens, welche vorsieht, bereits für eine Aufgabe trainierte Modelle, auf eine neue, verwandte Aufgabe nachzutrainieren.

Dadurch ist es vorteilhafterweise möglich ein insbesondere allgemeineres Modell zu trainieren und anschließend vorteilhafterweise auf eine jeweilige Einsatzumgebung nachzutrainieren. Es entfällt ein wiederholtes und daher kostenintensives vollständiges Training, da für jedes Nachtraining das gleiche allgemeine Modell als eine Basis genutzt werden kann.

In einer vorteilhaften Weiterbildung der Erfindung ist die Erfassungseinheit eine Kamera, insbesondere für eine Erzeugung von RGB- und/oder Graustufenbilder.

Dadurch ist es vorteilhafterweise möglich Bilddaten für eine Auswertung zu nutzen, wobei Kameras die RGB- und/oder Graustufenbilder bereitstellen marktüblich und sehr kostengünstig sind.

Gemäß einer vorteilhaften Ausgestaltung ist der jeweilige mit dem Zugfahrzeug verbundene Anhänger und/oder weitere Anhänger mit einer Deichsel mit genau einem Gelenk ausgebildet.

Die Deichsel kann ein mechanisches Verbindungselement oder Verbindungssystem sein, welche zwei Anhänger miteinander oder das Zugfahrzeug mit einem Anhänger koppelt. Die Deichsel kann elektromechanische Komponenten aufweisen, welche insbesondere ein elektrisch gesteuertes Öffnen und Schließen der Koppelung ermöglichen.

Dadurch ist es vorteilhafterweise möglich eine einfachere Modellierung der Kinematik zu realisieren, da diese durch Deichseln mit mehr als einem Gelenk stark verkompliziert wird.

Gemäß einer vorteilhaften Ausgestaltung ist eine Kinematik wenigstens des letzten Anhängers des Routenzugs durch eine einzelne nicht angetriebene Achse ausgebildet.

Die Kinematik, insbesondere eine Fahrzeugkinematik beschreibt ein Fahrverhalten welches insbesondere durch Anzahl und Anordnung von Rädern und/oder einer Antriebstechnik und/oder einer Beladung des Fahrzeugs oder Anhängers abhängig sein kann.

Dadurch ist es vorteilhafterweise möglich ein weniger komplexes Modell der Routenzug-Kinematik bereitzustellen und der Anhänger mit der einzelnen nicht angetriebenen Achse stellt eine sehr günstige minimale Ausführung des Anhängers dar.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: zwei Routenzüge mit je einer ungeraden und einer geraden Anzahl von Anhängern;
- Figur 2: einen Routenzug mit einer geraden Anzahl von Anhängern; und
- Figur 3: zwei Routenzüge mit unterschiedlichen Erfassungseinheiten.

Gleichartige, gleichwertige oder gleichwirkende Elemente können in einer der Figuren oder in den Figuren mit denselben Bezugszeichen versehen sein.

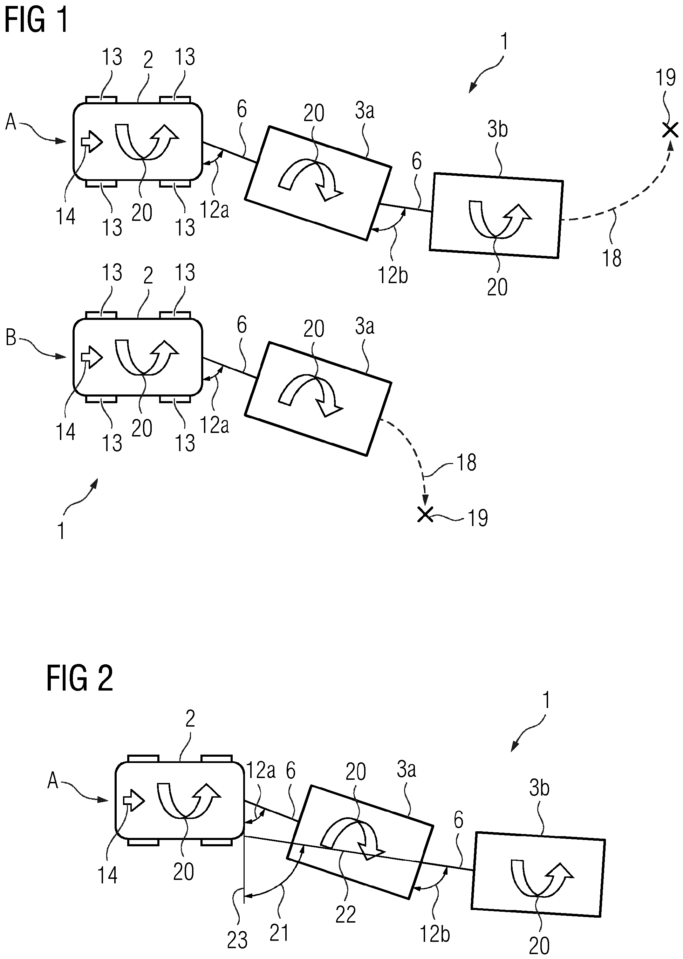

Die Figur 1 zeigt schematisch den Routenzug 1 für eine Rückwärtsfahrt mit zwei Anhängern A und den Routenzug 1 für eine Rückwärtsfahrt mit einem Anhänger B. Variante A repräsentiert hierbei die Rückwärtsfahrt mit der geraden Anzahl von Anhängern und Variante B die Rückwärtsführt mit der ungeraden Anzahl von Anhängern.

Die beiden Routenzüge 1 bestehen jeweils aus einem Zugfahrzeug 2 und wenigstens dem einzelnen Anhänger 3a, wobei ein Anhänger 3b und weitere Anhänger hinzukommen können.

Das Zugfahrzeug 1 kann Räder besitzen, insbesondere Antriebsräder 13 und das Zugfahrzeug 1 kann über eine Deichsel 6 mit dem Anhänger 3a verbunden sein, entsprechend kann der Anhänger 3a über die Deichsel 6 mit dem Anhänger 3b verbunden sein und so weiter.

Das Zugfahrzeug 1 und alle Anhänger können einen Regelsinn aufweisen. Der Regelsinn 20 kann eine Richtung einer Regelwirkung beschreiben. Er kann angeben, ob eine Erhöhung einer Stellgröße zu einer Erhöhung oder Verringerung der Regelgröße führt. Beim Routenzug besteht die Besonderheit, dass sich der Regelsinn 20 zwischen Zugfahrzeug 1 und einem letzten Anhänger des Routenzugs umkehren kann. Diese Umkehrung tritt bei der ungeraden Anzahl B von Anhängern ein, während bei einer geraden Anzahl A von Anhängern der Regelsinn 20 des letzten Anhängers dem Regelsinn 20 des Zugfahrzeugs entsprechen kann.

Bei der Rückwärtsfahrt A, B versucht entweder ein Fahrer oder ein autonom fahrender Routenzug eine Solltrajektorie 18 abzufahren, welche schließlich in einem Zielpunkt 19 mündet. Bei einem Lenken des Zugfahrzeugs 1 während der Fahrt auf der Solltrajektorie 18 können sich die Gierwinkel 12a, b der Deichseln ändern.

Eine Richtung der Rückwärtsfahrt 14 kann abhängig vom Zugfahrzeug sein, wobei die Rückwärtsfahrt für einen Gabelstapler in eine Antriebsrichtung, für einen Schubmaststapler in eine Lastrichtung und für ein klassischen Zugfahrzeug ebenfalls in Lastrichtung erfolgen kann.

Die Figur 2 zeigt schematisch den Routenzug 1 in der Variante A, eine mechanische Wirkungskette kann aus den Linien 21, 22, 23 entnommen werden, wobei die Linien 21, 22, 23 Hilfslinien sind und der erste Anhänger 3a durch die Hilfslinie 22 in den Hintergrund tritt. Die Schematisierung zeigt warum der Regelsinn bei gerade Anzahl von Anhängern zwischen letzten Anhänger und Zugfahrzeug mindestens ähnlich sein kann.

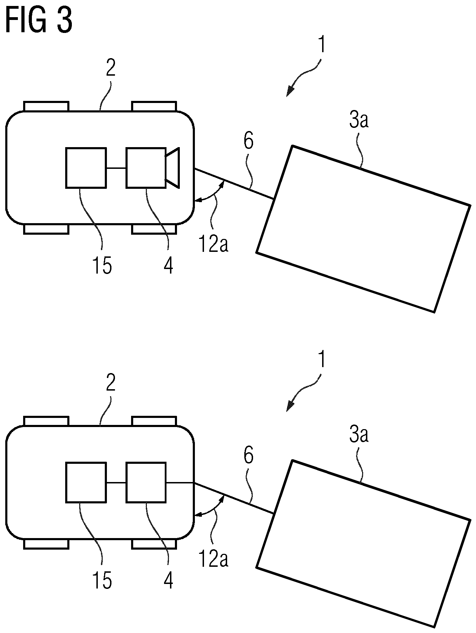

Die Figur 3 zeigt schematisch zwei Routenzüge 1 mit jeweils unterschiedlichen Erfassungseinheiten 4 für eine jeweilige Vorrichtung für die Rückwärtsfahrt des jeweiligen Routenzugs 1.

Die Vorrichtung umfasst eine Recheneinheit 15 und die Erfassungseinheit 4, wobei die Vorrichtung am Zugfahrzeug 2 des Routenzugs 1 angebracht sein kann.

In einer ersten Ausgestaltung der Erfindung kann die Erfassungseinheit 4 eine Kamera sein, welche insbesondere RGB- und/oder Graustufenbilder bereitstellen kann. Die Kamera kann vom Zugfahrzeug aus auf die angekoppelten Anhänger ausgerichtet sein und stellt hierbei Abbilder von erfassten Anhängern bereit. Durch die in den Abbildern dargestellte räumliche Anordnung der Anhänger ist ein korrespondierender Gierwinkel der Anhänger bestimmbar. In einer weiteren Ausprägung kann der jeweilige Giernwinkel abhängig von einer räumlichen Lage des Zugfahrzeugs sein.

In einer weiteren Ausgestaltung der Erfindung kann die Erfassungseinheit 4 eine Messeinheit für die Erfassung des Gierwinkels 12a sein. Hierbei können Gierwinkel unmittelbar erfasst werden. In einer weiteren Ausgestaltung ist es möglich die Gierwinkel aller angekoppelten Anhänger zu erfassen. Ein entsprechendes Kommunikationsprotokoll zwischen den gekoppelten Anhängern und dem Zugfahrzeug kann dies ermöglichen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Routenzug
- 2: Zugfahrzeug
- 3 a, b: Anhänger
- 4: Erfassungseinheit
- 6: Deichsel
- 12 a, b: Gierwinkel der Deichsel
- 13: Antriebsrad
- 14: Richtung der Rückwärtsfahrt
- 15: Recheneinheit
- 18: Solltrajektorie
- 19: Zielpunkt
- 20: Regelsinn
- 21: Gierwinkel zwischen Zugfahrzeug und dem letzten Anhänger des Routenzugs
- 22: Virtuelle Deichsel zwischen Zugfahrzeug und letzten Anhänger
- 23: Virtuelle Hilfslinie für Gierwinkelbestimmung
- A: Rückwärtsfahrt mit zwei Anhängern
- B: Rückwärtsfahrt mit einem Anhänger

## Patentansprüche

1. Verfahren zur Regelung einer Rückwärtsfahrt eines Routenzugs umfassend die Schritte:
- erfassen und/oder empfangen wenigstens eines Gierwinkels eines letzten Anhängers des Routenzugs, wobei der Gierwinkel abhängig zu einer räumlichen Lage eines Zugfahrzeugs des Routenzugs ist; und
**gekennzeichnet durch** folgenden Schritt:
- regeln einer Solltrajektorie für den letzten Anhänger des Routenzugs abhängig vom erfassten Gierwinkel, wobei hierzu eine Drehzahl wenigstens eines Antriebsrads des Zugfahrzeugs bei der Rückwärtsfahrt so eingestellt wird, dass eine Lineargeschwindigkeit und eine Rotationsgeschwindigkeit des letzten Anhängers der Solltrajektorie folgen, wobei ein Regelsinn des Antriebsrads des Zugfahrzeugs abhängig von einer Anzahl von Anhängern des Routenzugs bestimmt wird, wobei der Regelsinn sich in Abhängigkeit von einer geraden oder ungeraden Anzahl von Anhängern umkehrt.

2. Verfahren gemäß Anspruch 1, **dadurch gekennzeichnet, dass** die Solltrajektorie mittels eines PI-Reglers geregelt wird.

3. Verfahren gemäß einem der vorhergehenden Ansprüche, **dadurch gekennzeichnet, dass** die Solltrajektorie mittels eines neuronalen Netzes geregelt wird.

4. Verfahren gemäß einem der vorhergehenden Ansprüche, **dadurch gekennzeichnet, dass** die Rückwärtsfahrt durch ein autonom fahrendes Fahrzeug durchgeführt wird.

5. Verfahren gemäß einem der vorhergehenden Ansprüche, **dadurch gekennzeichnet, dass** die Rückwärtsfahrt durch einen Fahrer gestartet wird, wobei der Routenzug für die Rückwärtsfahrt manuell in einem Tippbetrieb fährt und der Routenzug außerhalb dieses Tippbetriebs manuell durch den Fahrer gesteuert wird.

6. Verfahren zum Training des neuronalen Netzes gemäß Anspruch 3, **dadurch gekennzeichnet, dass** Trainingsdaten mittels einer Routenzugsimulation und/oder einer Umgebungssimulation generiert werden und das neuronale Netz mit diesen Trainingsdaten trainiert wird, wobei die Routenzugsimulation Trainingsdaten für Routenzüge mit bis zu acht Anhänger generiert.

7. Verfahren gemäß Anspruch 6, **dadurch gekennzeichnet, dass** das mit Daten aus der Routenzugsimulation und/oder Umgebungssimulation trainierte neuronale Netz mittels Daten aus realen Testfahrten nachtrainiert wird, wobei eine Methode des Transfer Learnings verwendet wird.

8. Vorrichtung für eine Rückwärtsfahrt eines Routenzugs umfassend ein Zugfahrzeug, wenigstens einen Anhänger, eine Recheneinheit und eine Erfassungseinheit, **dadurch gekennzeichnet, dass**
- die Erfassungseinheit dazu ausgebildet ist, einen letzten Anhänger des Routenzugs zu erfassen und ein Abbild des Anhängers bereitzustellen;
- die Recheneinheit mittels des Abbilds zum Berechnen eines Gierwinkels des letzten Anhängers ausgebildet ist, wobei der Gierwinkel abhängig zu einer räumlichen Lage des Zugfahrzeugs des Routenzugs ist; und
- die Recheneinheit zum Regeln einer Solltrajektorie für den letzten Anhänger des Routenzugs, abhängig vom erfassten Gierwinkel, ausgebildet ist, wobei hierzu eine Drehzahl wenigstens eines Antriebsrads des Zugfahrzeugs bei der Rückwärtsfahrt so eingestellt wird, dass eine Lineargeschwindigkeit und eine Rotationsgeschwindigkeit des letzten Anhängers der Solltrajektorie folgen, wobei ein Regelsinn des Antriebsrads des Zugfahrzeugs abhängig von einer Anzahl von Anhängern des Routenzugs bestimmbar ist.

9. Vorrichtung gemäß Anspruch 8, **dadurch gekennzeichnet, dass** die Erfassungseinheit eine Kamera, insbesondere für eine Erzeugung von RGB- und/oder Graustufenbilder ist.

10. Vorrichtung gemäß einem der Ansprüche 8 oder 9, **dadurch gekennzeichnet, dass** der jeweilige mit dem Zugfahrzeug verbundene Anhänger und/oder weitere Anhänger mit einer Deichsel mit genau einem Gelenk ausgebildet ist.

11. Vorrichtung gemäß einem der Ansprüche 8 bis 10, **dadurch gekennzeichnet, dass** eine Kinematik wenigstens des letzten Anhängers des Routenzugs durch eine einzelne nicht angetriebene Achse ausgebildet ist.
